# EUROPEAN PATENT APPLICATION

(11) **EP 1 382 521 A1**
(43) Date of publication of application: **21.01.2004**
(21) Application number: 02425780.0
(22) Date of filing: 17.12.2002
(51) Int. Cl.: B62K 23/08, B62J 1/12, B62J 35/00, B62J 25/00

(54) **Adjustable saddle, tank and footrest unit for a motorcycle**

(30) Priority: 16.07.2002 EP 02425467
(71) Applicant: Ducati Motor Holding S.p.A., 40132 Bologna (IT)
(72) Inventor: Terblanche, Pierre, 40135 Bologna (IT)
(74) Representative: Lanzoni, Luciano

(57) **Abstract**

An adjustable saddle, and foot rest unit (1) for a motorcycle comprises a tank (2), a saddle (3), a left foot rest assembly (5) and a right foot rest assembly (6) mounted on a frame (13). The position of the saddle (3) can be adjusted relative to the frame (13) according to a direction of movement (L) substantially longitudinal relative to the motorcycle. The tank (2) is also preferably adjustable together with the saddle (3). To further adapt to the user, the left foot rest assembly (5) and the right foot rest assembly (6) are also adjustable.

## Description

The present invention relates to an adjustable saddle, tank and footrest unit.

Patent EP-0 751 063 discloses a motorcycle saddle that is adjustable in height. The saddle is divided into two parts: the part on the rider's side is adjustable in height at different positions with respect to a part of the motorcycle frame and comprises a front support block with grooves that overlap in stepped fashion and a rear lock device with two supports also step shaped.

One problem with this type of adjustable saddle is that it can be adjusted mainly in height whereas longitudinal adjustment of the saddle is not possible at all or, at best, is very limited. Another problem with prior art saddle adjustment systems is due to the fact that, in some saddle positions, unwanted gaps may be created between the saddle and the tank. These gaps are not only uncomfortable for the rider but may also prevent the rider from properly straddling the tank, thus reducing motorcycle control.

The aim of the present invention is to provide an improved adjustable saddle, tank and footrest unit for a motorcycle that allows the rider to maintain the optimum position according to his/her size and riding style.

In accordance with one aspect of it, the present invention discloses an adjustable saddle, tank and footrest unit for a motorcycle as described in the independent claim below.

The dependent claims describe preferred, advantageous embodiments of the invention.

The preferred embodiments of the invention will now be described, without restricting the scope of the inventive concept, with reference to the accompanying drawings in which:

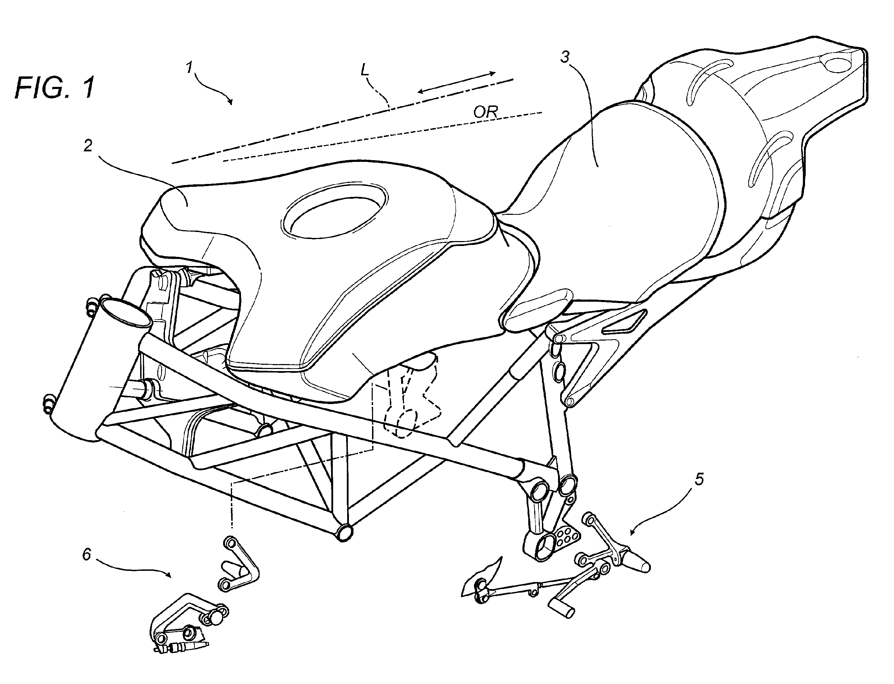

- Figure 1 is a perspective view from above of the motorcycle adjustable saddle, tank and footrest unit according to the present invention;
- Figure 2 is a perspective view from below showing details of the motorcycle adjustable saddle, tank and footrest unit of Figure 1;
- Figure 3 is a left-hand side view of the motorcycle adjustable saddle, tank and footrest unit illustrated in the figures listed above;
- Figures 4 and 5 are details of the tank mounting shown in cross section;
- Figure 6 is a left-hand side view of the footrest on the gear change side; and
- Figure 7 is a right-hand side view of the footrest on the brake side.

With reference to the accompanying drawings, the numeral 1 denotes an adjustable saddle, tank and footrest unit for a motorcycle.

The motorcycle adjustable saddle, tank and foot rest unit 1 comprises a fuel tank 2, a saddle 3, a left foot rest assembly 5 and a right foot rest assembly 6.

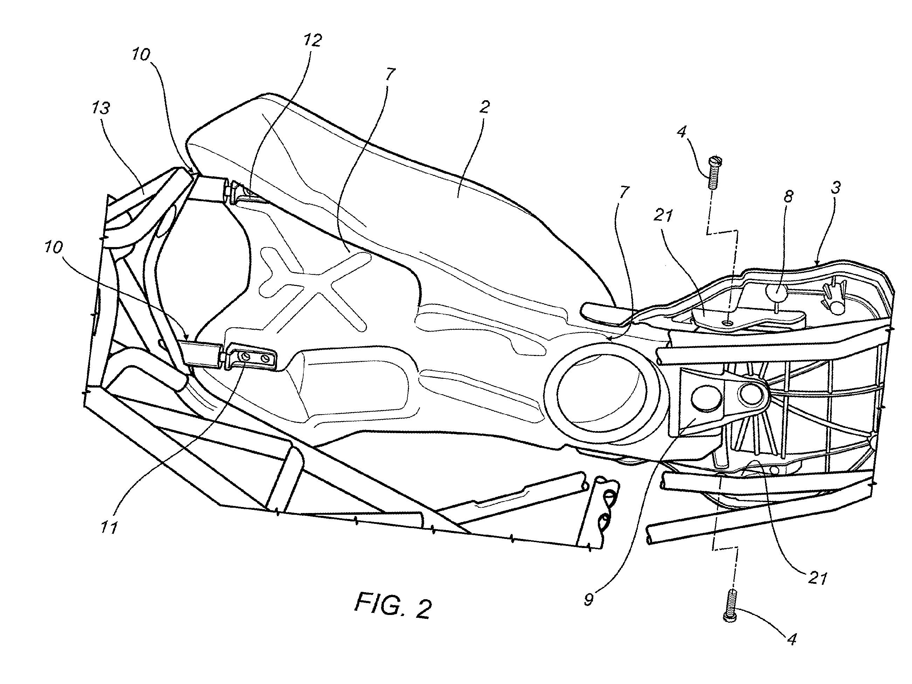

The fuel tank 2 comprises a base 7 which extends under the saddle 3 and which is joined to the back end support 8 of the saddle 3 (Figure 2).

The connection between the base 7 of the fuel tank 2 and the back end support 8 also comprises a reinforcing element 9 which increases the rigidity of the saddle 3 and tank 2 assembly.

The front of the base 7 of the fuel tank 2 comprises at least one connection 10, preferably a right-hand connection 11 and a left-hand connection 12, to the motorcycle frame 13.

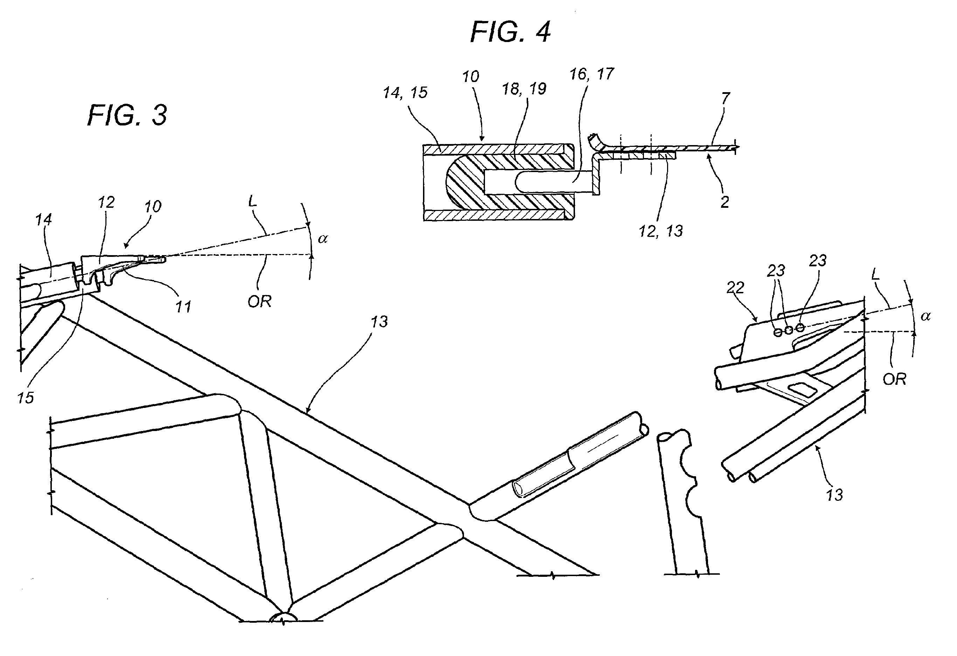

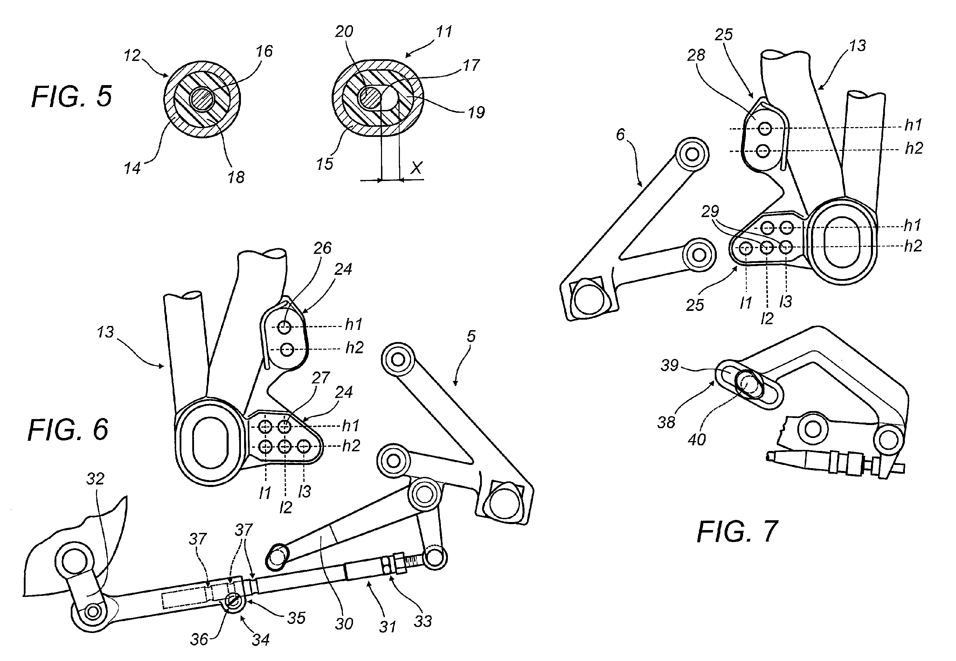

The connection 10, illustrated in detail in Figures 4 and 5, comprises at least one tube 14, 15 connected to the frame 13, and at least one pin 16, 17 connected to the base 7 of the tank 2.

Positioned between these elements 14, 15 and 16, 17, there is at least one bush 18, 19 made of elastomeric material to dampen vibrations and to facilitate insertion of the pin 16, 17.

In a preferred embodiment, illustrated in Figure 4, where there are two connections 11, 12, the tube 14 and the bush 18 of the connection 11 are circular and the pin 16 is inserted into them with little play so that it slides in a substantially longitudinal direction.

The other connection 12 has an oval tube 15 and bush 19, the latter also presenting an oval hole 20 into which the corresponding pin 17 is inserted with a certain amount of transversal play X. This makes it possible to compensate for dimensional differences between the connections 10 of the frame 13 and the connections of the tank 2.

As mentioned above, the pins 16, 17 can slide in a substantially longitudinal direction, labelled L in the drawings. Preferably, the direction L is inclined by an angle α upwardly relative to a horizontal line OR parallel to the rolling plane of the motorcycle.

At the back, the saddle back end support 8 has a connection that can be moved with at least one mounting plate 21 for a zone 22 of the frame 13.

In the preferred embodiment illustrated in Figure 3, the mobile connection is embodied by the plate 21 with at least one hole and a set of threaded holes 23 arranged in the zone 22. In this embodiment, there are three holes but there might be more or less, depending on the adjustment range required.

Alternatively, the holes 22 might be substituted by a slot (not illustrated) and by a securing nut slidable in a guide (not illustrated).

The holes 23 (or the slot) are also arranged with their axes (or the longitudinal axis in the case of the slot) positioned along the longitudinal direction L in which the pins 16, 17 slide and inclined by an angle αupwardly relative to a horizontal line OR.

To fix the back end of the tank 2 and saddle 3 assembly, there are also fixing means embodied by screws 4 which are inserted into the hole in the mounting plate 21 and screwed into the threaded holes 23 or into the slidable nut (not illustrated).

Thus, the entire tank 2 and saddle 3 assembly can slide in the direction L to adjust to the rider's size and riding style.

It should be noted that the movement in the direction L, since the latter is inclined upwards slightly, causes a simultaneous movement of the tank 2 and saddle 3 assembly away from the handlebar and from the foot rest assemblies 5, 6, also lifting it a little with respect to the foot rest assemblies 5, 6 and with respect to road level.

This provides an optimum adjustment for the rider since it involves varying the relative distances between saddle 3 and handlebar and between saddle 3 and foot rest assemblies 5, 6, and not only adjusting the distance of the saddle 3 from the ground.

The angle α of the direction L may range between 5 and 20 degrees (sexagesimal) and is preferably 10 degrees (sexagesimal).

The left foot rest assembly 5 and the right foot rest assembly 6 can be adjusted in height, length and angle using the appropriate adjustable connections 24, 25 on the frame 13.

These connections consist of upper plates connected to the frame 13 and having a set of upper holes 26, 28 at two height levels h1, h2 (for example, two holes one above the other) and lower plates connected to the frame 13 and having a set of lower holes 27, 29 at two height levels h1, h2 and at three longitudinal positions 11, 12, 13 (for example, two holes at a first level and three holes at a slightly lower level).

This provides different possibilities for adjusting the left and right foot rest assemblies 5 and 6 in height, by combining one of the height levels h1, h2 of the frame 13 connections with one of the lower longitudinal positions 11, 12, 13. More specifically, by moving both the upper connection 26, 28 and the lower connections 27, 29 on to one of the two levels h1, h2, the foot rest assemblies 5, 6 can be adjusted in height.

Instead, by moving the lower connections 27, 29 to one of the longitudinal positions 11, 12, 13 if they are at the height level h2 or to one of the 11, 12 if they are at the height level h1, it is possible to adjust the lengthways positions and angle of the foot rest assemblies 5, 6. As a whole, the left foot rest assembly 5 and the right foot rest assembly 6 can also be adjusted according to the same direction L of longitudinal movement as the saddle 3.

One of the foot rest assemblies 5 or 6 comprises a gear change pedal 30 pivoted to the foot rest assembly 5 or 6 itself, and a rod 31 for connection to a gear change lever 32 on the engine.

The rod 31 can be adjusted longitudinally so as to adapt to the movements of the foot rest assembly 5 or 6.

The rod 31 has a first, fine adjustment device 33 consisting of a lead screw and nut mechanism and a second, coarse adjustment device 34 consisting of a clamp 35 and screw 36, the latter being designed to tighten the clamp 35.

To prevent unwanted sliding of the second adjustment, the rod 31 has a set of safety grooves 37 into which the shank of the screw 36 is partly and selectively inserted.

The other foot rest assembly 6 or 5 comprises a brake pedal 38 that can be adjusted longitudinally using a slot 39, made at the end of the lever of the pedal 38, and a pin 40, on which the rider's foot operates and which slides within the slot 39.

This is necessary because, unlike the gear change pedal 30, the brake pedal 38 is pivoted to a fixed part integral with the frame 13 and thus, when the foot rest is moved relative to the brake pedal, it may be necessary to adjust the distance between the foot rest and the pin 40.

The invention achieves important advantages.

The adjustable saddle, tank and foot rest unit according to the present invention permits optimum adjustment of the motorcycle to the size and riding style of the rider.

A particularly advantageous aspect is the fact that the principal adjustment of the saddle 3 is in the longitudinal direction L and that the saddle 3 moves together with the tank 2.

This prevents awkward gaps being left between the saddle 3 and the tank 2 and allows the rider to maintain proper control of the motorcycle through contact with the tank 2 which is always at the same relative distance from the saddle 3.

The invention as described above may be modified and adapted in several ways without thereby departing from the scope of the inventive concept as defined in the claims.

List of reference characters
- 1: Adjustable saddle, tank and footrest unit for a motorcycle
- 2: tank
- 3: saddle
- 4: saddle fixing screws
- 5: left foot rest assembly
- 6: right foot rest assembly
- 7: base of tank 2
- 8: saddle back end support
- 9: reinforcing element
- 10: front connection of tank 2
- 11: right-hand connection
- 12: left-hand connection
- 13: motorcycle frame
- 14, 15: frame tubes
- 16, 17: tank 2 mounting pins
- 18, 19: bush
- 20: oval bush hole
- 21: saddle 3 rear mounting plate
- 22: zone of frame 13 where saddle is mounted
- 23: holes in zone 22
- 24, 25: adjustable connections for foot rest assemblies 5, 6
- 26, 28: set of upper holes for fixing foot rest assemblies 5, 6
- 27, 29: set of lower holes for fixing foot rest assemblies 5, 6
- 30: gear change pedal
- 31: connecting rod
- 32: gear change lever on engine
- 33: lead screw and nut fine adjustment device
- 34: coarse adjustment device
- 35: clamp
- 36: screw for tightening clamp 35
- 37: rod 31 safety grooves
- 38: brake pedal
- 39: slot at end of brake lever
- 40: brake pedal pin acted upon by rider's foot
- X: transversal play between oval hole and mounting pin
- L: direction of movement of unit 1
- OR: horizontal direction
- α: angle made by direction L
- h1, h2: height adjustment levels for mounting foot rest assemblies 5, 6
- 11, 12, 13: longitudinal adjustment positions for mounting foot rest assemblies 5, 6

## Claims

1. An adjustable saddle, tank and foot rest unit (1) for a motorcycle comprising a tank (2), a saddle (3), a left foot rest assembly (5) and a right foot rest assembly (6) mounted on a motorcycle frame (13), where the position of the saddle (3) can be adjusted relative to the frame (13), the unit being **characterised in that** the saddle (3) comprises adjustment means (4, 21, 22, 23) such that the saddle (3) can be adjusted in a direction of movement (L) substantially longitudinal relative to the motorcycle.

2. The motorcycle adjustable saddle, tank and foot rest unit (1) according to claim 1, **characterised in that** the tank (2) comprises adjustment means (10, 20) which also permit adjustment of the tank (2) in the direction of movement (L).

3. The motorcycle adjustable saddle, tank and foot rest unit (1) according to either of the foregoing claims, **characterised in that** the direction (L) is inclined by an angle (α) upwardly relative to a horizontal line (OR) parallel to the rolling plane of the motorcycle.

4. The motorcycle adjustable saddle, tank and foot rest unit (1) according to claim 3, **characterised in that** the angle (α) of the direction (L) of movement ranges from 5 to 20 degrees (sexagesimal).

5. The motorcycle adjustable saddle, tank and foot rest unit (1) according to claim 3, **characterised in that** the angle (α) of the direction (L) of movement is 10 degrees (sexagesimal).

6. The motorcycle adjustable saddle, tank and foot rest unit (1) according to one of the foregoing claims, **characterised in that** the front end of the saddle (3) and tank (2) assembly has at least one connection (10) to the frame (13) slidable in the same direction (L) of movement as the saddle (3).

7. The motorcycle adjustable saddle, tank and foot rest unit (1) according to one of the foregoing claims, **characterised in that** the tank (2) is integral with the saddle (3).

8. The motorcycle adjustable saddle, tank and foot rest unit (1) according to claim 6 or 7, **characterised in that** the longitudinally sliding connection (10) to the frame (13) comprises at least one tube (14, 15) connected to the frame (13) and at least one pin (16, 17) connected to the tank (2), with at least on bush (18, 19) of elastomeric material positioned between the tube (14, 15) and the pin (16, 17) to damp vibrations and to facilitate insertion of the pin (16, 17).

9. The motorcycle adjustable saddle, tank and foot rest unit (1) according to any of the foregoing claims from 6 to 8, **characterised in that** the longitudinally sliding connection (10) to the frame (13) comprises a right-hand connection (11) and a left-hand connection (12), one of these connections (11; 12) having a circular tube (14; 15) and bush (18; 19) into which the pin (16; 17) is inserted with little play so that it can slide in a substantially longitudinal direction; and the other connection (12; 11) having an oval tube (15; 14) and bush (19; 18), the latter also having an oval hole (20), into which the related pin (17; 16) is inserted with a certain amount of transversal play (X) so as to compensate for dimensional differences between the connections of the frame (13) and the connections of the tank (2).

10. The motorcycle adjustable saddle, tank and foot rest unit (1) according to one of the foregoing claims, **characterised in that** the back end of the saddle (3) and tank (2) assembly has at least one connection to the frame (13) mobile in the same direction (L) of movement, comprising at least one plate (21) with at least one hole and connected to the saddle (3), for mounting to a zone (22) of the frame (13).

11. The motorcycle adjustable saddle, tank and foot rest unit (1) according to claim 10, **characterised in that** the plate (21) comprises at least one screw (4) which is inserted into the hole in the plate (21) and selectively into one of the holes forming part of the set of threaded holes (23) of the zone (22).

12. The motorcycle adjustable saddle, tank and foot rest unit (1) according to claim 11, **characterised in that** the threaded holes (23) of the zone (22) are arranged with their axes positioned along the longitudinal direction (L) in which the pins (16, 17) slide and inclined by an angle (α) upwardly relative to a horizontal line (OR).

13. The motorcycle adjustable saddle, tank and foot rest unit (1) according to one of the foregoing claims, **characterised in that** the left foot rest assembly (5) and the right foot rest assembly (6) are adjustable in height and angle through the adjustable connections (24, 25) on the frame (13).

14. The motorcycle adjustable saddle, tank and foot rest unit (1) according to claim 13, **characterised in that** the left foot rest assembly (5) and the right foot rest assembly (6) are adjustable in the same direction (L) of movement as the saddle (3).

15. The motorcycle adjustable saddle, tank and foot rest unit (1) according to claim 13 or 14, **characterised in that** the adjustable connections (24, 25) comprise upper plates, connected to the frame (13) and having a set of upper holes (26, 28) at two height levels (h1, h2), and lower plates, connected to the frame (13) and having a set of lower holes (27, 29) at two height levels (h1, h2) and at three longitudinal positions (11, 12, 13).

16. The motorcycle adjustable saddle, tank and foot rest unit (1) according to any of the foregoing claims from 13 to 15, **characterised in that** the foot rest assembly (5; 6) comprises a gear change pedal (30) with a rod (31) for connection to a gear change lever (32) on the engine; the rod (31) having a longitudinal adjustment system designed to adapt it to the movements of the foot rest assembly (5; 6) and comprising a first, fine adjustment device (33) consisting of a lead screw and nut mechanism and a second, coarse adjustment device (34) consisting of a clamp (35) and a screw (36).

17. The motorcycle adjustable saddle, tank and foot rest unit (1) according to claim 16, **characterised in that**, for the device (34), the rod (31) has a set of safety grooves (37) into which the shank of the screw (36) is partly and selectively inserted.

18. The motorcycle adjustable saddle, tank and foot rest unit (1) according to any of the foregoing claims from 13 to 17, **characterised in that** the foot rest assembly (6; 5) comprises a brake pedal (38) that can be adjusted longitudinally using a slot (39), made at the end of the lever of the pedal (38), and a pin (40), on which the rider's foot operates and which slides and can be locked within the slot (39).
